(19) Europäisches Patentamt
European Patent Office
Office européen des brevets

(11) **EP 3 171 477 A1**

(12) **EUROPEAN PATENT APPLICATION**

(43) Date of publication:
**24.05.2017 Bulletin 2017/21**

(51) Int Cl.:
*H02J 3/16* (2006.01)    *H02J 3/38* (2006.01)
*H02J 3/46* (2006.01)

(21) Application number: **16199060.1**

(22) Date of filing: **16.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.11.2015 JP 2015225476**

(71) Applicant: **Hitachi, Ltd.**
**Tokyo 100-8280 (JP)**

(72) Inventors:
• **KONDO, Shinichi**
**Tokyo 100-8280 (JP)**

• **NAKATANI, Masachika**
**Tokyo 100-8280 (JP)**
• **WATANABE, Masahiro**
**Tokyo 100-8280 (JP)**
• **SAKAMOTO, Kiyoshi**
**Tokyo 100-8280 (JP)**
• **SAEKI, Mitsuru**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **WIND FARM AND CONTROL METHOD THEREOF**

(57)    Provided is a wind farm (100) including a control device (3) that adjusts power supplied from a wind power generation device (GW) through a power converter (C) to a power system (5). The control device includes a power value estimation unit that obtains information regarding a value of an active power (Wp) or a reactive power (Wq) in the power system (5), a control effect comparison unit (321) that calculates a control effect from the information regarding the value of the active power (Wp) or the reactive power (Wq) which is obtained by the power value estimation unit and information regarding a loss in a portion ranging from the converter to an association point (X) of the power system (5), and a control plan (CP) determination unit (32) that provides to the outside an instruction for or transmits, as a control plan (CP), the active power (Wp) or the reactive power (Wq) at the time of maximizing the control effect obtained by the control effect comparison unit (321) with respect to a plurality of sets of operation conditions in the power system (5).

*FIG. 1*

EP 3 171 477 A1

**Description**

BACKGROUND OF THE INVENTION

FIELD OF THE INVENTION

The present invention relates to a wind farm and a control method thereof, and more particularly, to a wind farm and a control method thereof which are capable of bringing benefits to a power system.

BACKGROUND ART

There has been concern regarding the depletion of fossil fuels, such as petroleum, for a long time and in addition, reduction in $CO_2$ emissions has become an urgent problem to be solved worldwide in order to cope with global warming in the global environment. In order to solve these problems, renewable energy power generation, such as photovoltaic power generation or wind power generation, which uses natural energy has been rapidly introduced throughout the world, as a power generation method that does not use fossil fuels and does not emit $CO_2$.

However, particularly, in wind power generation, power is generated using wind which may change from moment to moment, and thus wind power generation has a feature that generated power greatly changes with time. For this reason, in a case where the generated power is associated with a power system, the supply and demand of power in a commercial power system may become out of balance due to fluctuations in generated wind power, and thus a problem such as voltage fluctuation or frequency fluctuation may occur, which leads to concern of deterioration in power quality.

At present, when generated wind power is associated with a power system, a balance between the supply and demand of power is maintained using a power generation output of a large-scale generator such as a thermal power plant which is located within the power system, as an adjustment means in accordance with the magnitude of a power demand on the power system side. However, a large number of wind power generation business operators in Japan already have system-associated wind power generation devices, and there is a trend of this number of business operators increasing, which leads to concern regarding adjustment means within power systems being insufficient.

Consequently, a method has been proposed in which voltage fluctuation in a power system is suppressed by a reactive power which is output by one or more wind power generation devices, with respect to a wind power generation device group (wind farm) constituted by wind power generation devices. For example, JP-A-2007-124779 proposes that "a parameter $\alpha$ (t) changing from moment to moment is estimated from a fluctuation component $\Delta P$ of an active power P which is output from a distributed power supply 1 and each detected value of a voltage fluctuation $\Delta V$ at an association point X5 which occurs due to the fluctuation component, and the distributed power supply 1 outputs a reactive power of Q=-$\alpha$P or Q=-$\alpha\Delta$P and suppresses only voltage fluctuation in a system 3 which is caused by the distributed power supply 1".

In addition, as a method of suppressing frequency fluctuation in a power system, a method has been proposed in which an output is restricted by using only a portion of wind power generation devices of a wind farm as a wind power generation device group for adjustment, and frequency fluctuation in a power system may be suppressed by canceling the restriction of an output of a wind power generation device for adjustment during the occurrence of a sudden change in the output of the wind farm which results in a frequency fluctuation in the power system. For example, JP-A-2012-241576 proposes that: "There is provided a control system of a wind power generation device group composed of a plurality of wind power generation systems connected to an electric power system via electric power cables, and at least one electric power storage system. The control system includes individual controllers provided in each of the plurality of wind power generation systems and the electric power storage system to transmit and receive operation information involving the output power of each of the plurality of wind power generation systems via a communication network, and a centralized control system for receiving information from the individual controllers via the communication network to calculate an output limit value of each of the plurality of wind power generation systems. The control system controls the operation of the windpower generation device group depending on the output instruction value transmitted from the centralized control system to each of the plurality of wind power generation systems".

According to JP-A-2007-124779 and JP-A-2012-241576, it is possible to contribute to the stable operation in terms of voltage and frequency of a power system using a large-capacity wind farm. However, a case where an effect of suppressing voltage fluctuation by the output of the above-mentioned reactive power is small and a case where the suppression of frequency fluctuation by the restriction and cancellation of output using a wind power generation device group becomes unnecessary when the reserve power of the power system is sufficient are also considered depending on the capacity or impedance of the power system associated with a wind farm.

On the other hand, when a large amount of power generated from renewable energy such as wind power generation or photovoltaic power generation is introduced to a power system, requiring control of a system support capability (called an ancillary service for a power system) which involves the suppression of voltage fluctuation and the suppression of frequency fluctuation at a wind farm level such that the most benefit is brought to a power system may be considered. In a case where such an ancillary service is used, there is a concern that control for bringing the most substantial benefit is not performed in the related art.

SUMMARY OF THE INVENTION

The invention is contrived in view of the above-mentioned problems of the related art, and an object thereof is to provide a wind farm including a wind power generation control device and a control method thereof which are capable of bringing benefits to a power system at most by appropriately controlling an active power and a reactive power of a wind power generation device of the wind farm.

In order to solve the above-described problem, the invention provides a wind farm including a control device that adjusts power supplied from a wind power generation device through a power converter to a power system, wherein the control device includes a power value estimation unit that obtains information regarding a value of an active power or a reactive power in the power system, a control effect comparison unit that calculates a control effect from the information regarding the value of the active power or the reactive power which is obtained by the power value estimation unit and information regarding a loss in a portion ranging from the converter to an association point of the power system, and/or a control plan determination unit that provides to the outside an instruction for or transmits, as a control plan, the active power or the reactive power at the time of maximizing the control effect obtained by the control effect comparison unit with respect to a plurality of sets of operation conditions in the power system.

In addition, the invention also provides a wind farm which is configured such that a plurality of sets of output terminals of wind power generation systems each of which is constituted by a wind power generation device and a power converter are connected to each other in parallel and which is connected to a power system at an association point, the wind farm including a control device that includes a power value estimation unit that obtains information regarding a value of an active power or a reactive power from information regarding a sensitivity of frequency with respect to an active power in the power system or a sensitivity of voltage with respect to a reactive power and regarding a necessary amount with respect to a permissible value of a frequency or a voltage, a control effect comparison unit that obtains a control effect, determined based on the information regarding the value of the active power or the reactive power which is obtained by the power value estimation unit and information regarding a loss in a portion ranging from the converter in each of the plurality of sets of the wind power generation systems to the association point of the power system, with respect to a plurality of operation conditions and compares the control effects with each other, and a control plan determination unit that provides to the outside an instruction for or transmits, as a control plan, the active power or the reactive power in a case of the operation conditions for maximizing the control effect.

In addition, the invention also provides a method of controlling a wind farm including a control device that adjusts power supplied from a wind power generation device through a power converter to a power system, the method including obtaining information regarding a value of an active power or a reactive power from information regarding a sensitivity of frequency with respect to an active power in the power system or a sensitivity of voltage with respect to a reactive power and regarding a necessary amount with respect to a permissible value of a frequency or a voltage, obtaining a control effect, determined based on the information regarding the value of the active power or the reactive power and information regarding a loss in a portion ranging from the converter to an association point of the power system, with respect to a plurality of operation conditions, and externally giving an instruction of or transmitting, as a control plan, the active power or the reactive power in a case of the operation conditions for maximizing the control effect.

According to the invention, it is possible to provide a system capable of stably operating a power system by optimally controlling an active power and a reactive power of a wind farm.

BRIEF DESCRIPTION OF THE DRAWINGS

Fig. 1 is a diagram showing configurations of a wind farm and a power system in Example 1 of the invention.
Fig. 2 is a functional block diagram of a wind farm control device in Example 1 of the invention.
Fig. 3 is a diagram showing an example of value information of active power in Example 1 of the invention.
Fig. 4 is a diagram showing an example of value information of a reactive power in Example 1 of the invention.
Fig. 5 is a diagram showing types of ancillary services with respect to the power system and methods of reflection on a wind farm control plan in Example 1 of the invention.
Fig. 6 is a diagram showing an example of a range in which a power converter is capable of outputting an active power and a reactive power.
Fig. 7 is a diagram showing a plurality of wind power generation systems and a configuration example of current collection cables ranging from respective wind power generation systems to an association point of a power system.

Fig. 8 is a diagram showing an example of time-series changes in an active power and a reactive power that are output from the wind farm to the power system.

Fig. 9 is a diagram showing an example of time-series changes in an active power and a reactive power that are output from the wind farm to the power system in a case where operation reserve power and a reactive power have a large value.

Fig. 10 is a diagram showing an example showing comparison between incomes of a power generation business operator of the wind farm.

Fig. 11 is a diagram showing configurations of a wind farm and a power system in Example 2 of the invention.

Fig. 12 is a functional block diagram of a wind farm control device in Example 2 of the invention.

Fig. 13 is a diagram showing an example of a method of actively outputting an active power from the wind farm in Example 2 of the invention.

Fig. 14 is a diagram showing an example of a method of actively outputting a reactive power from the wind farm in Example 2 of the invention.

Fig. 15 is a diagram showing an example of a method of estimating the sensitivity of an active power in Example 2.

Fig. 16 is a diagram showing an example of a method of estimating the sensitivity of a reactive power in Example 2.

Fig. 17 is a flow chart showing a series of processes using a wind power generation control method according to the invention.

DETAILED DESCRIPTION OF THE INVENTION

Hereinafter, examples of the invention will be described with reference to the accompanying drawings.

Example 1

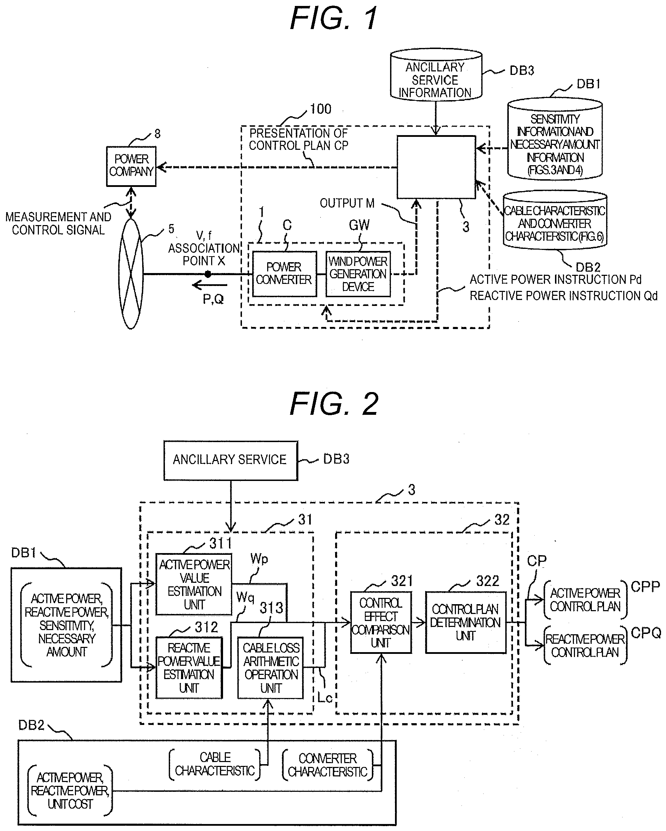

Fig. 1 is a diagram showing configurations of a wind farm and a power system in Example 1 of the invention.

According to the configuration of Fig. 1, power is supplied from a wind farm 100 which is a renewable energy power plant to a power system 5, and a power company 8 takes up a measurement signal from the power system 5 to thereby control another power generation facility within the power system 5 belonging to the power company 8 or a power transmission facility on the basis of an appropriate control signal in order to optimally operate the facility.

Meanwhile, in the above-mentioned configuration in the present state, the power company 8 is positioned as a power transmission business operator and the wind farm 100 is positioned as a power generation business operator in the foreseeable future after division into power generation and power transmission is performed, but there is no change in a relationship between the power system 5 being managed to be stably operated by belonging to the power company 8 (power transmission business operator) and the wind farm 100 (power generation business operator) supplying power to the power system.

Regarding interests therebetween, power being capable of being supplied to the power system 5 in a possible range is of benefit to the wind farm 100 (power generation business operator), and the power company 8 (power transmission business operator) may need to cooperate with the wind farm 100 (power generation business operator) in achieving stable operation. Not only maximum power generation depending on a wind state but also cooperation, such as the restriction or stop thereof, is required as necessary. For this reason, it is preferable to perform system operation with contents which both the wind farm and the power company can be satisfied with.

The wind farm 100 of Fig. 1 creates a control plan CP of the wind farm 100 with contents appropriate for the operation of the power system 5 in the power company 8 (power transmission business operator) and presents the created control plan to the power company 8 (power transmission business operator). In addition, power (active power P, reactive power Q) which is generated by the wind farm 100 is controlled in accordance with the created control plan CP. In this case, the control plan CP maybe obtained from only measurement information capable of being ascertained on the wind farm 100 side. In general, since the wind farm 100 and the power company 8 (power transmission business operator) are different business operators, it is assumed that it is difficult to set information obtained from the power company 8 (power transmission business operator) as a control plan, and thus the information may be set as just a control plan based on information on the wind farm 100.

The wind farm 100 of Fig. 1 includes the wind power generation system 1 and the control device 3. Here, the wind power generation system 1 includes one or a plurality of wind power generation devices GW and a power converter C that converts power generated by the wind power generation device GW into power having a shape or magnitude appropriate for the power system 5. The wind power generation device GW is a wind power generation device in which the number of rotations and a pitch are variable and are capable of being controlled. In addition, the power converter C is a power converter capable of independently controlling an active power P and a reactive power Q that flow to the power system 5 from power generated by the wind power generation device GW.

The power company 8 operates the power system 5, and performs a duty of maintaining voltage and a balance between the demand and supply of power within the power system 5 in an appropriate range. A duty division point between the power company 8 (power transmission business operator) and the wind farm 100 (power generation business operator) is an association point X, power (active power P, reactive power Q) at the point X is controlled by the control device 3, and a voltage V and a frequency f at the point X are measured and controlled.

The control device 3 in the wind farm 100 presents a control plan CP of the wind farm 100 to the power company 8 (power transmission business operator), and gives a power instruction value (active power instruction value Pd, reactive power instruction value Qd) to the wind power generation device GW in accordance with the control plan CP, thereby controlling operation. In order to create the control plan CP and the power instruction value (active power instruction value Pd, reactive power instruction value Qd), the control device 3 inputs an output M of the wind power generation device GW or holds pieces of information necessary for a sensitivity information and necessary amount information database DB1, a cable characteristic and converter characteristic database DB2, and an ancillary service information database DB3 in advance.

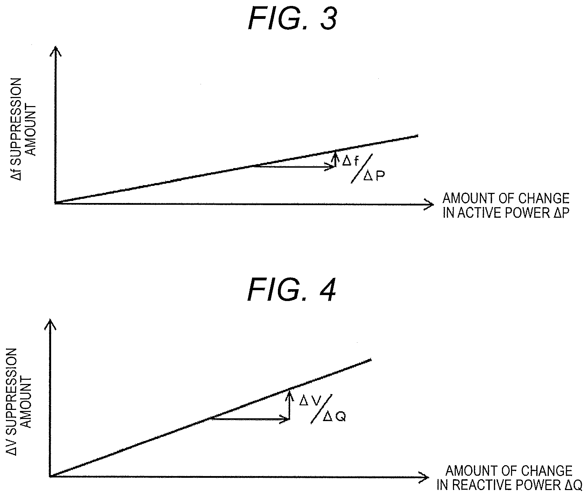

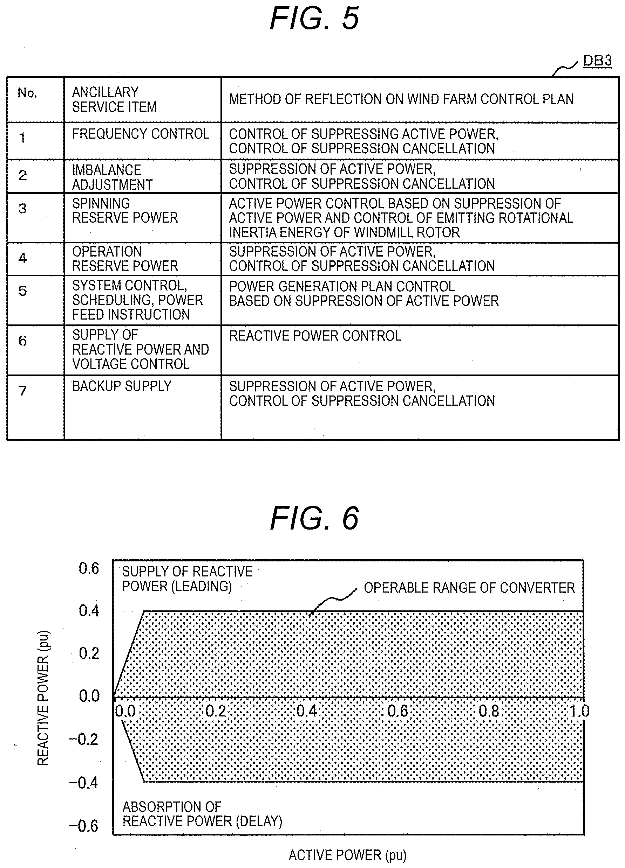

Meanwhile, the information stored in the sensitivity information and necessary amount information database DB1 is information regarding the sensitivity and necessary amounts of an active power or a reactive power shown in Figs. 3 and 4. The information stored in the cable characteristic and converter characteristic database DB2 is information regarding characteristics such as impedance of a cable connecting the wind power generation system 1 in the wind farm 100 shown in Fig. 6 and the association point X, and characteristics of the power converter C. The information stored in the ancillary service information database DB3 is information regarding the type of ancillary service shown in Fig. 5, and the like. In addition, various pieces of information indicating operation conditions of the power system are periodically taken in the control device 3 in the wind farm 100.

Fig. 2 is a functional block diagram of the control device 3 of the wind farm in Example 1. The functions of the control device 3 can be roughly classified into a system sensitivity analysis unit 31 and a control plan determination unit 32.

Here, the system sensitivity analysis unit 31 includes estimation units (active power value estimation unit 311, reactive power value estimation unit 312) which reads sensitivities and necessary amounts of an active power and a reactive power which are held in the sensitivity information and necessary amount information database DB1 to thereby estimate an active power value Wp and a reactive power value Wq, such as the voltage, frequency, and stability of each power system, which are used for stable operation and a cable loss arithmetic operation unit 313 that reads characteristics of a cable in the wind farm 100 to thereby arithmetically operate the loss of the cable.

Meanwhile, the estimation units (active power value estimation unit 311, reactive power value estimation unit 312) estimates and outputs the active power value Wp and the reactive power value Wq with reference to the sensitivity information and necessary amount information database DB1 in estimating the active power value Wp and the reactive power value Wq, such as the voltage, frequency, and stability of each power system, which are used for stable operation.

Fig. 3 is a diagram showing an example of the sensitivity of an active power P which is held in the sensitivity information and necessary amount information database DB1. The horizontal axis represents an active power variation $\Delta P$, and the vertical axis represents a suppression amount of a frequency variation $\Delta f$. A sensitivity ($\Delta f/\Delta P$) indicates the degree of change in a frequency f of the power system with respect to an active power P which is output to the power system 5 through the association point X by the wind farm 100.

In addition, Fig. 4 is a diagram showing an example of the sensitivity of a reactive power Q which is held in the sensitivity information and necessary amount information database DB1. The horizontal axis represents a reactive power variation $\Delta Q$, and the vertical axis represents a suppression amount of a voltage variation $\Delta V$. A sensitivity ($\Delta V/\Delta Q$) indicates the degree of change in a voltage V of the power system with respect to a reactive power Q which is output to the power system 5 through the association point X by the wind farm 100.

In these examples, the sensitivity ($\Delta f/\Delta P$) of an active power is a suppression amount of a frequency fluctuation $\Delta f$ in the power system, and indicates that the suppression amount of $\Delta f$ increases as the variation $\Delta P$ of the active power becomes larger. In addition, the sensitivity ($\Delta V/\Delta Q$) of a reactive power is a suppression amount of a voltage fluctuation $\Delta V$ in the power system, and indicates that the suppression amount of $\Delta V$ increases as the variation $\Delta Q$ of the reactive power becomes larger. Information regarding the sensitivities ($\Delta f/\Delta P$) and ($\Delta V/\Delta Q$) vary depending on the configuration of the power system, the tidal current state thereof, and the like. The sensitivity information may be created by a power company (power transmission business operator) or may be created by a power generation business operator operating the wind farm on the basis of information regarding the power system, and the like. In addition, these pieces of sensitivity information change from moment to moment depending on conditions of the power system.

In a case where these sensitivities ($\Delta f/\Delta P$) and ($\Delta V/\Delta Q$) are created by a power generation business operator operating the wind farm 100, the sensitivities are obtained from the past operation results at the association point X in advance and are held in the sensitivity information and necessary amount information database DB1 or are appropriately obtained from operation results at the present point in time and are used.

The information regarding necessary amounts which is held in the sensitivity information and necessary amount information database DB1 means restriction conditions in operation. Regarding the control of an active power P, necessary amount information is information regarding restriction conditions such as a fluctuation permissible range, an upper limit, and a lower limit of a frequency f of the power system which fluctuates as a result of the control of the active power P. In general, the fluctuation permissible range in a commercial frequency is in a range of 0. 2 Hz to 0.3 Hz. In addition, regarding the control of a reactive power Q, necessary amount information is information regarding restriction conditions, such as a fluctuation permissible range, an upper limit, and a lower limit of a voltage V of the power system which fluctuates as a result of the control of the reactive power Q. These pieces of necessary amount information are determined by the power company 8 or the power transmission business operator (not shown) on the basis of a tidal current state of the power system, and the like.

The active power value estimation unit 311 and the reactive power value estimation unit 312 of the system sensitivity analysis unit 31 read sensitivities of an active power and a reactive power and information regarding necessary amounts meaning operation restriction conditions which are held in the sensitivity information and necessary amount information database DB1 to thereby estimate an active power value Wp and a reactive power value Wq, such as the voltage, frequency, and stability of each power system, which are used for stable operation.

For example, the active power value estimation unit 311 of the system sensitivity analysis unit 31 estimates the value of an active power from sensitivity information indicating the degree of change in a frequency f of the power system with respect to an active power P which is output to the power system 5 through the association point X by the wind farm and information regarding necessary amounts, such as a fluctuation permissible range, an upper limit, and a lower limit of the frequency f, which is determined by the power company 8 or a power transmission business operator (not shown) on the basis of a tidal current state of the power system, and the like. Specifically, in a case where the frequency f has a high sensitivity and a narrow fluctuation permissible range for the reason such as the power system 5, associated with the wind farm, being distant from a substation, a change in the active power P of the wind farm has a great influence on the power system, and thus it is estimated that a value Wp of the active power is high.

Similarly, the reactive power value estimation unit 312 estimates a value Wq of a reactive power from sensitivity information indicating the degree of change in a voltage V of the power system 5 with respect to a reactive power Q which is output to the power system 5 through the association point X by the wind farm and information regarding necessary amounts, such as a fluctuation permissible range, an upper limit, and a lower limit of the voltage V, which is determined by the power company 8 or a power transmission business operator on the basis of a tidal current state of the power system, and the like.

In addition, the reason why necessary amount information is taken into consideration in the active power value estimation unit 311 and the reactive power value estimation unit 312 is as follows. In a situation where an active power or a frequency is desired to be controlled, a frequency changeable range is determined from a relationship between a frequency at the present point in time and a fluctuation permissible range thereof, and an active power or a frequency has a limited change range rather than being changeable without limitation, in consideration of a sensitivity $(\Delta f/\Delta P)$. This is also applicable to a relationship between a reactive power and a voltage. In a situation where a reactive power or a voltage is desired to be controlled, a voltage changeable range is determined from a relationship between a voltage at the present point in time and a fluctuation permissible range thereof, and a reactive power or a voltage has a limited change range rather than being changeable without limitation, in consideration of a sensitivity $(\Delta V/\Delta Q)$. For this reason, an active power value Wp or a reactive power value Wq fluctuate depending on the width of a changeable range, and may thus be considered from the viewpoint of necessary amount information.

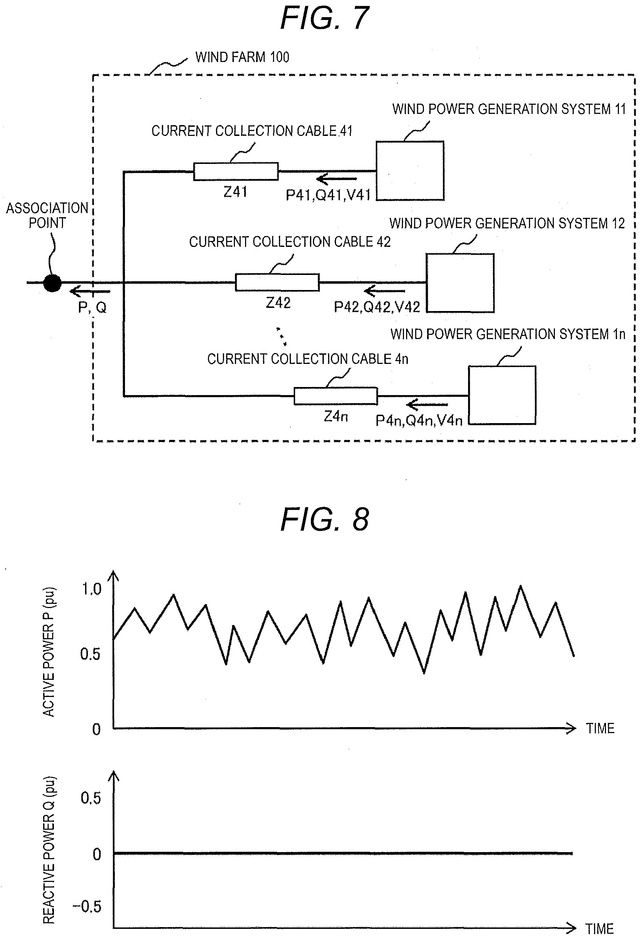

In addition, the cable loss arithmetic operation unit 313 of the system sensitivity analysis unit 31 reads characteristics of a cable in the wind farm 100 which are stored in the cable characteristic and converter characteristic database DB2 to thereby arithmetically operates the loss of the cable. Although details of the cable loss arithmetic operation unit 313 will be described later, in short, information regarding impedance in a cable ranging from the power converter C to the association point X is held as cable characteristics, and the loss of power in the portion is obtained. Meanwhile, a power loss Lc is a function between an active power and a reactive power that are determined depending on operation conditions of the power converter C and has a variable value Lc instead of having a fixed value at all times. In addition, a plurality of sets of wind power generation systems 1 each of which is constituted by the wind power generation device GW and the power converter C are connected to each other in parallel in the wind farm 100 as shown in Fig. 7 and are associated with each other at an association point X, and thus a cable loss Lc includes individual cable losses in the respective wind power generation systems 1 and the sum thereof.

In this manner, the active power value Wp, the reactive power value Wq, and the cable loss Lc are given as analysis results by the system sensitivity analysis unit 31. In the invention, analysis results from the system sensitivity analysis unit 31 are given as a plurality of analysis results from the viewpoint of an ancillary service with reference to the ancillary service information database DB3, instead of being given as the above-mentioned one set.

Here, the wording "ancillary service" as used herein refers to a system support capacity including the control of a voltage fluctuation and the control of a frequency fluctuation at a wind farm level. When a large amount of renewable energy power generation such as wind power generation or photovoltaic power generation is introduced to the power system 5, the wind farm 100 is required to perform control for bringing benefits to the power system 5 at most. Thereby, a power generation business operator on the wind farm side intends to perform an operation which is of great advantageous to a power transmission business operator without determining a power generation output according to the circumstances thereof.

Fig. 5 is a diagram showing types of ancillary services with respect to the power system and methods of reflection on a wind farm control plan for realizing the services in a wind farm. Meanwhile, the wording "types of ancillary services" as used herein refers to operation conditions of ancillary services. Ancillary services required for the stable operation of the power system include types of No1 (frequency control), No2 (imbalance adjustment), No3 (spinning reserve power), No4 (operation reserve power), No5 (system control, scheduling, power feed instruction), No6 (reactive power supply and voltage control), and No7 (backup supply), and it is possible to cope with each of the types by controlling an active power P and a reactive power Q of the wind farm 100.

For example, regarding the frequency control of No1, in a case where the frequency of the power system 5 is increased due to a rapid decrease in a load, or the like, an effect of decreasing the frequency of the power system 5 by suppressing the active power of the wind farm 100 is obtained. On contrary, in a case where the frequency of the power system 5 is decreased due to a rapid increase in a load, or the like, an effect of increasing the frequency of the power system by canceling the suppression of the active power of the wind farm 100 is obtained.

In addition, regarding the reactive power supply and voltage control of No6, in a case where the voltage of the power system 5 is decreased, an effect of increasing the voltage of the power system 5 by supplying a leading reactive power from the wind farm 100 is obtained. On contrary, in a case where the voltage of the power system 5 is increased, an effect of decreasing the voltage of the power system 5 by supplying a delay reactive power from the wind farm 100 is obtained. The above-mentioned active power and reactive power are controlled by the power converter C.

Meanwhile, the ancillary services of No2 to No5 and No7 can also be similarly realized by the suppression of an active power P of the wind farm and the control of canceling the suppression. Here, a reflection method is shown in only Fig. 5, and a detailed description thereof will be omitted.

As a result, the values of an active power value Wp and a reactive power value Wq are given from the active power value estimation unit 311 and the reactive power value estimation unit 312 of the system sensitivity analysis unit 31 by the multiplication of service items of the ancillary services.

The control plan determination unit 32 includes a control effect comparison unit 321 and a control plan determination unit 322. The control effect comparison unit reads analysis results (an active power value Wp, a reactive power value Wq, and a power loss Lc) of the system sensitivity analysis unit 31, characteristics of the power converter C which are held in the cable characteristic and converter characteristic database DB2, and unit cost information of an active power and a reactive power, and compares control effects with each other. The control plan determination unit determines control plans CPP and CPQ of an active power and a reactive power on the basis of comparison results of the control effects and presents the comparison results.

Specifically, the control effect comparison unit 321 of the system sensitivity analysis unit 31 of Fig. 2 determines a combination of an active power P and a reactive power Q in which a control effect is highest and an income of a power generation business operator of the wind farm 100 is increased, from information, such as active power values Wp and reactive power values Wq which are obtained for each ancillary service by the system sensitivity analysis unit 31 and a loss Lc of a current collection cable in the wind farm, pieces of unit cost information Up and Uq of an active power and a reactive power, and information such as characteristics of the power converter of the wind power generation system 1.

Here, when the value of a digitized active power is set to be Wp, the value of a reactive power is set to be Wq, a unit cost of an active power is set to be Up, a unit cost of a reactive power is set to be Uq, and a loss of a cable is set to be Lc, a control effect index E is expressed by, for example, Expression (1).

$$E = \Sigma \{ (W_p \times U_p) + (W_q \times U_q) \} - \qquad (1)$$

In the invention, control effects in ancillary services, power factor fixing control, or the like as operation conditions to be applied are compared with each other and examined so as to maximize a control effect index E, and control plans of an active power and a reactive power in the case of the selected control effect are determined.

Fig. 6 is a diagram showing an example of a range in which the power converter C, which is a component of the wind power generation system 1, is capable of outputting an active power P and a reactive power Q. In a region in which the horizontal axis represents an active power P and the vertical axis represents a reactive power Q, the range is limited to a range in which a reactive power falls within $\pm 0.4$ (p.u). In addition, in a region in which an active power is small, the range is limited to a range in which a reactive power is also small.

The power converter C has a function of adjusting a voltage V and a frequency f in order to apply power generated by the wind power generation device GW to the power system 5. At this time, phases of an output voltage and an output current are controlled, and thus it is possible to perform the control at a ratio of an active power P to a reactive power Q in a range as shown in the drawing. In general, the power converter C is operated with a power factor 1.0 (reactive power 0 Var) or a fixed power factor (P/Q=fixed), but proportions of an active power P and a reactive power Q are changed within the range depending on types and combinations of ancillary services to be applied in the invention.

Meanwhile, it has been described that the sensitivity information of Fig. 1 and the necessary amount information stored in the necessary amount information database DB1 are restriction conditions (fluctuation permissible range) of a frequency and a voltage of the power system, but the range in which the power converter C is capable of outputting an active power P and a reactive power Q, which is shown in Fig. 6, is also a restriction condition (fluctuation permissible range) at the time of operating the wind farm 100. Accordingly, a range in which the power converter C is capable of outputting an active power P and a reactive power Q may be considered in determining an active power value Wp and a reactive power value Wq.

Fig. 7 is a diagram showing a plurality of wind power generation systems (11 to 1n) in the wind farm 100 and a configuration example of current collection cables (41 to 4n) ranging from respective wind power generation systems to the association point X of the power system 5.

It is assumed that active powers P (P41 to P4n) and reactive powers Q (Q41 to Q4n) are output from the respective wind power generation systems (11 to 1n) and voltages at ends of the wind power generation systems are set to V41 to V4n, respectively. At this time, when it is assumed that impedances of the current collection cables (41 to 4n) ranging from the respective wind power generation systems (11 to 1n) to the association point X are respectively indicated by Z41 to Z4n, a power transmission loss Lc within the wind farm 100 is expressed by Expression (2).

$$Lc = \frac{Z41\left(P41^2 + Q41^2\right)}{V41^2} + \frac{Z42\left(P42^2 + Q42^2\right)}{V4n^2} + \cdots + \frac{Z4n\left(P4n^2 + Q4n^2\right)}{V4n^2} \qquad (2)$$

In Expression (2), a subscript n denotes the number of wind power generation systems in the wind farm. In addition, the active powers P41 to P4n are determined depending on the energy of wind, and are also determined depending on the energy of wind received in each of the wind power generation systems even when an active power is suppressed or the control of cancelling the suppression of an active power is performed.

According to Expression (2), when a reactive power Q is output from the wind farm 100 according to an ancillary service, it can be understood that a power transmission loss LOSS can be changed by changing the distribution of the reactive powers Q41 to Q4n.

In addition, in order to minimize Expression (2) (that is, to maximize an output), proportions of the reactive powers Q41 to Q4n may be determined as expressed by Expression (3). That is, the distribution of the reactive powers is performed at a ratio between reciprocals of impedances of the current collection cables, and thus the distribution is performed so that a reactive power Q of a cable having a high impedance is small and a reactive power Q of a cable having a low impedance is large, thereby allowing a reactive power loss of the entire wind farm to be minimized.

$$Q41 : Q42 : \cdots : Q4n = \frac{1}{Z41} : \frac{1}{Z42} : \cdots : \frac{1}{Z4n} \qquad (3)$$

In addition, the sum of the reactive powers may be set to be Q, and may satisfy Expression (4).

$$Q41 + Q42 + \cdots + Q4n = Q \qquad (4)$$

In this manner, an active power P and a reactive power Q of the wind power generation system 1 in the wind farm 100 are controlled, and thus it is possible to perform control of outputting active powers and reactive powers corresponding to respective ancillary services from the association point X and minimizing a power transmission loss within the wind farm.

Fig. 8 is a diagram showing an example of time-series changes in an active power P and a reactive power Q that are output from the wind farm 100 to the power system 5. This example shows a case where a value Wp of an active power P such as a reserve power is small, a value Wq of a reactive power Q is small, or a power factor (1.0) has a maximum value, it is preferable for a power generation business operator to sell all of the powers generated by the wind farm at a fixed purchase price FIT (feed-in tariff program) without performing an ancillary service. In such an example, the active power P changes depending on a wind velocity changing from moment to moment, and a reactive power is set to zero at all times.

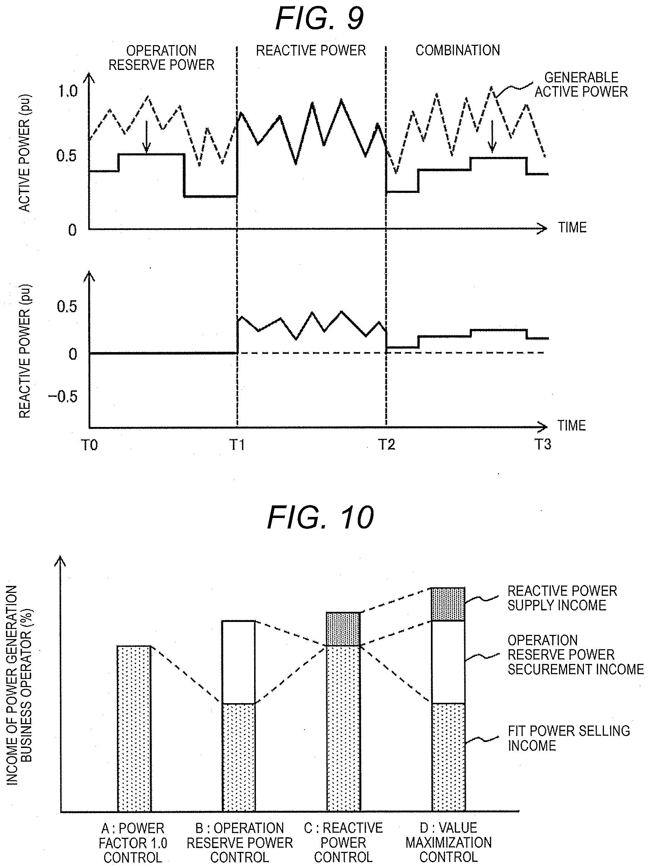

Fig. 9 is a diagram showing an example of time-series changes in an active power P and a reactive power Q in a case where an operation reserve power and a value Wq of a reactive power Q are large and optimal control for each time changes, as compared to Fig. 8. In a period between time T0 to time T1, control of suppressing an active power P is performed in order to secure a portion of the active power P with which the wind farm 100 can generate power, as an operation reserve power on the assumption that an operation reserve power and a value Wp of an active power P are large. In this manner, in a situation where an operation reserve power is regarded as important, a wind farm performs an operation of suppressing an active power P to a fixed value by giving priority to circumstances on a power transmission business operator side instead of outputting changing wind power as it is.

In a period between the time T1 to time T2, control of outputting a maximum reactive power capable of being output by the power converter C in an operable range is performed as shown in Fig. 6 on the assumption that a value Wq of a reactive power Q is large.

In a period between the time T2 and time T3, control of securing a portion of an active power capable of being generated by a wind farm as an operation reserve power and outputting a reactive power on the assumption that a value is maximized in a case where an operation reserve power and a reactive power are combined with each other.

Fig. 10 is a bar graph showing an example in which an income of a power generation business operator of a wind farm in a case where control is performed based on power factor 1.0 fixation is performed as shown in Fig. 8 is compared with an income of the power generation business operator of the wind farm in a case where control is performed by operation reserve power control and reactive power control which are ancillary services and in a case of value maximization control of the invention which is based on values of an active power and a reactive power.

In case A in which power factor 1.0 control is performed, all of the powers generated by the wind farm are set at an FIT price (fixed purchase price) and sold, which brings an income of a business operator.

In case B in which control of securing an operation reserve power is performed, a portion of an active power capable of being generated is suppressed, and thus power sold at an FIT price is reduced as compared to the case of power factor 1.0 control. Alternatively, a price for an ancillary service of securing a reserve power is paid by a power company or a power transmission business operator, and thus the sum of incomes of the power generation business operator may be increased as compared to the case of power factor 1.0 control.

In addition, in case C of reactive power control, a price for an ancillary service supplying a reactive power is paid, in addition to an amount of selling at an FIT price.

In case D of value maximization control, control is performed so as to maximize the sum of an FIT power selling income, an operation reserve power securement income, and a reactive power supply income, and thus it is possible to more meet a request of the power system than in the case of power factor 1.0 control or a case corresponding to a single ancillary service and to expect an increase in an income of the power generation business operator.

As described above, according to the invention, the state of the power system is estimated on a power generation business operator side from information capable of being ascertained by the power generation business operator and presents a control plan CP of an active power or a reactive power to the power transmission business operator side. Presentation contents are related to a control plan for which it is considered that a value is largest in the state of the wind farm, and includes power factor 1.0 fixation control, operation reserve power control or reactive power control which is an ancillary service, and value maximization control of an active power and a reactive power. Further, the presentation contents include specific processing contents of an ancillary service.

The control plan is presented to the power transmission business operator side, several subsequent treatments on the power transmission business operator side are assumed. A first treatment is to accept a proposal of the power generation business operator as it is. In this case, the power generation business operator operates the wind power generation system in accordance with a control plan proposed by the power generation business operator. A second treatment is to accept a proposal of the power generation business operator which is partially corrected. In this case, the power generation business operator operates the wind power generation system in accordance with a corrected edition of a control plan which is proposed by the power generation business operator. A third treatment is not to accept a proposal of the power generation business operator. In this case, the power generation business operator cancels a control plan which is proposed by the power generation business operator. For example, it is considered that power is generated in a wind state while minimizing a power transmission loss.

As described above, according to Example 1 of the invention, a value at the time of performing an operation with respect to a plurality of operation contents of an ancillary service is estimated on the wind farm side, and an operation content having a maximum value is presented to the power transmission business operator side. Thereby, the wind farm side (power generation business operator side) can perform an operation which has an operation content advantageous to the wind farm and is capable of bringing benefits to a power system at most.

Example 2

In Example 1, the sensitivity information and necessary amount information database DB1 is provided and holds information regarding the sensitivity and necessary amount of an active power or a reactive power in advance.

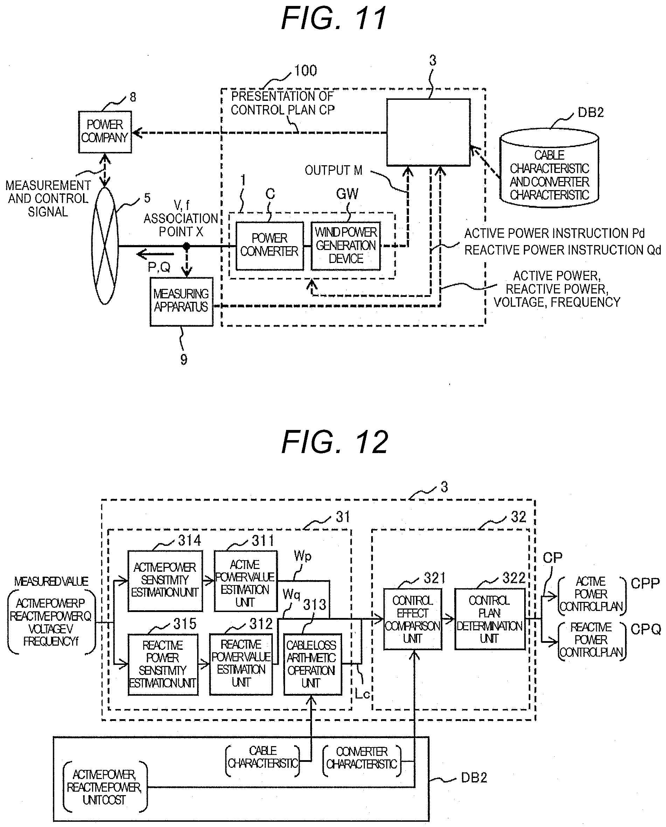

On the other hand, in Example 2, sensitivity information is not stored in the sensitivity information and necessary amount information database DB1, and information regarding the sensitivity of an active power or a reactive power is obtained from moment to moment from the latest information of the power system. Example 2 will be described with reference to Figs. 11 to 16.

Fig. 11 is a diagram showing configurations of a wind farm and a power system in an example in a case where information regarding values of an active power and a reactive power is obtained from outputs of an active power and a reactive power which are obtained from the wind farm and measured values. Fig. 11 is different from Fig. 1 in that pieces of information regarding values of an active power and a reactive power and necessary amounts thereof, which are input from the outside, are obtained from measured values of an active power, a reactive power, a voltage, a frequency, and the like which are measured by a measuring apparatus 9 provided at an association point X.

Fig. 12 is a functional block diagram of a wind farm control device 3 in Example 2. Fig. 12 is different from Fig. 2 in that a system sensitivity analysis unit 31 includes an active power sensitivity estimation unit 314 that estimates the sensitivity of an active power P from information such as an active power P, a reactive power Q, a voltage V, and a frequency f which are measured at an association point X, and a reactive power sensitivity estimation unit 315 that estimates the sensitivity of the reactive power Q.

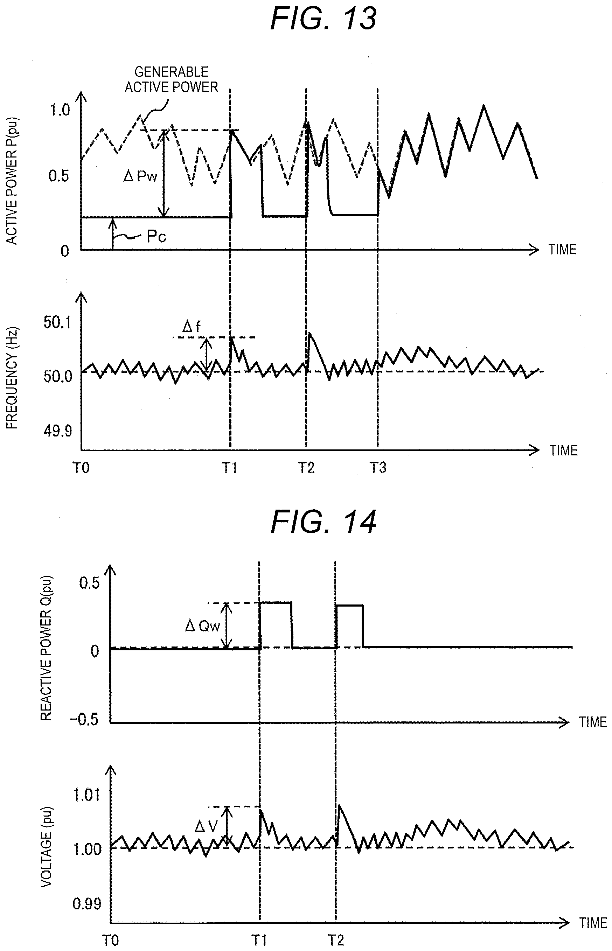

Fig. 13 is a diagram showing an example of a method of actively outputting an active power from the wind farm 100 at the time of estimating the sensitivity of an active power in Example 2. Here, fluctuations in an active power P and a frequency f over time are input and monitored in order to measure with what degree of sensitivity the frequency f of the power system responds, in accordance with an output fluctuation of the wind farm.

In a first measurement stage for estimating a sensitivity, control of suppressing an active power P of the wind farm to a fixed value Pc smaller than an active power capable of being generated in a period between time T0 and time T1 of Fig. 13, and the suppression at the time T1 is canceled.

In a second measurement stage, a change $\Delta f$ in the frequency of the power system at the time T1 is recorded with respect to an amount of change $\Delta Pw$ in an active power at the time of canceling the suppression. Since a fluctuation in the frequency of the power system also includes a component which is not related to an output of the wind farm, the same control is performed a plurality of times while changing conditions of $\Delta Pw$, thereby statistically estimating the sensitivity of an active power. Fig. 13 shows that the same measurement is repeatedly performed at times T2 and T3.

Fig. 14 is a diagram showing an example of a method of actively outputting a reactive power from the wind farm at the time of estimating the sensitivity of a reactive power in Example 2. Here, fluctuations in a reactive power Q and a voltage V over time are input and monitored in order to measure with what degree of sensitivity the voltage V of the power system responds, in accordance with an output fluctuation of the wind farm.

In a first measurement stage for estimating a sensitivity, a reactive power of the wind farm is controlled to 0 (pu) in a period between time T0 and time T1 of Fig. 14, and $\Delta Qw$ is then output as a reactive power at the time T1.

In a second measurement stage, a change $\Delta V$ in the voltage of the power system at the time of outputting the reactive power $\Delta Qw$ is recorded. Since a fluctuation in the voltage of the power system also includes a component which is not related to an active power and a reactive power of the wind farm, the same control is performed a plurality of times while changing conditions of $\Delta Qw$, thereby statistically estimating the sensitivity of a reactive power.

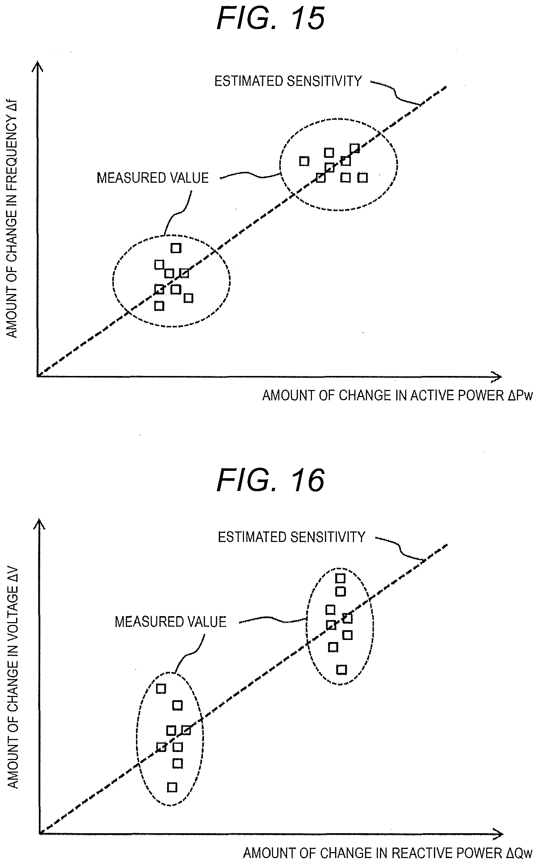

Fig. 15 is a diagram showing an example of a method of estimating the sensitivity of an active power from measured values of an active power $\Delta Pw$ which is output from the wind farm and a change $\Delta f$ in the frequency of the power system at the time of estimating the sensitivity of an active power in Example 2. Since the measured values of $\Delta Pw$ and $\Delta f$ include an external disturbance of a frequency, an estimated sensitivity is obtained from a plurality of pieces of data by a least square method or the like.

Fig. 16 is a diagram showing an example of a method of estimating the sensitivity of a reactive power from measured values of a reactive power $\Delta Qw$ which is output from the wind farm and a change $\Delta V$ in the voltage of the power system at the time of estimating the sensitivity of a reactive power in Example 2. Since the measured values of $\Delta Qw$ and $\Delta V$ include an external disturbance of a voltage, an estimated sensitivity is obtained from a plurality of pieces of data by a least square method or the like.

According to Example 2, pieces of information ($\Delta f/\Delta P$) and ($\Delta V/\Delta Q$) regarding a sensitivity are obtained from a real latest power system state, and thus it is possible to obtain the pieces of information ($\Delta f/\Delta P$) and ($\Delta V/\Delta Q$) regarding a sensitivity on which the present state is reflected more accurately than in the database method of Example 1 in which the pieces of information are obtained from the past measurement results and are used as fixed values, that is, to obtain an active power value Wp and a reactive power value Wq.

Example 3

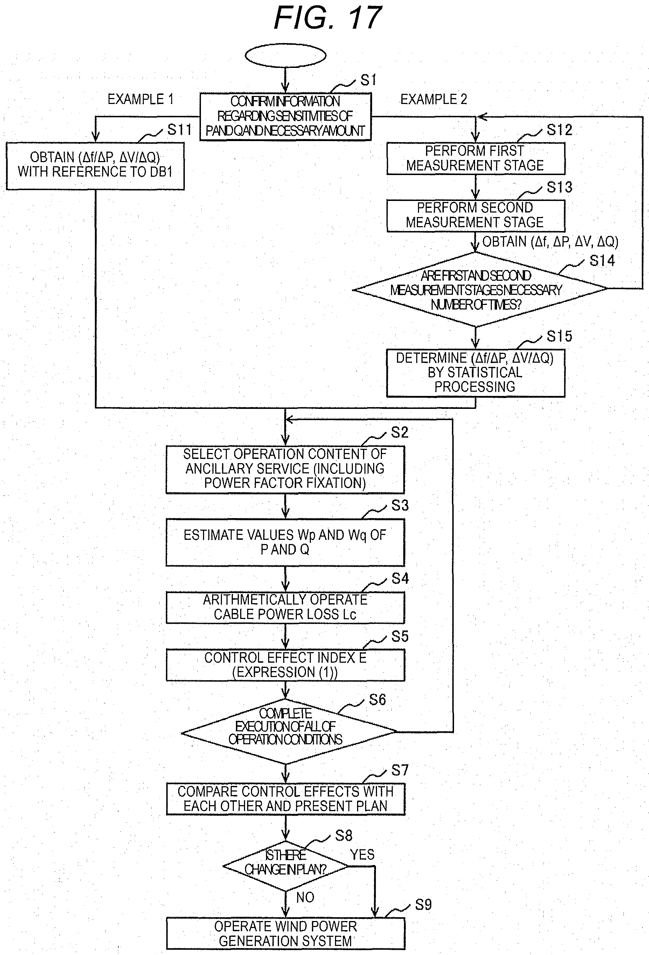

In Example 3, a wind power generation control method will be described with reference to Fig. 17. Fig. 17 is a flow chart showing a series of processes according to the invention.

In the flow chart of Fig. 17, pieces of information regarding sensitivities of an active power and a reactive power and necessary amounts thereof are confirmed in a first processing step S1. Specifically, in a case of the database method of Example 1, pieces of information regarding sensitivities ($\Delta f/\Delta P$) and ($\Delta V/\Delta Q$) are obtained with reference to the sensitivity information and necessary amount information database DB1 (processing step S11).

In a sequential obtainment method of Example 2, a first measurement stage for estimating a sensitivity is performed in a processing step S12, and a second measurement stage for estimating a sensitivity is performed in a processing step S13, thereby obtaining $\Delta f$, $\Delta P$, $\Delta V$, and $\Delta Q$.

In a processing step S14, the first measurement stage and the second measurement stage are repeatedly performed a plurality of times, and pieces of information regarding sensitivities ($\Delta f/\Delta P$) and ($\Delta V/\Delta Q$) are obtained by a statistical method (for example, a least square method) shown in Figs. 15 and 16 in a processing step S15 at a point in time when a large number of pieces of information are obtained.

In the next processing step S2, one of operation contents of a plurality of ancillary services is selected with reference to the ancillary service information database DB3.

In a processing step S3, a value Wp of an active power P and a value Wq of a reactive power Q in a case of the operation content of the ancillary service are estimated using sensitivities ($\Delta f/\Delta P$) and ($\Delta V/\Delta Q$), information regarding restriction conditions, and the like under conditions of the operation content of the ancillary service which is selected in the processing step S2. When the estimation is performed, it is assumed that information regarding necessary amounts (a fluctuation permissible range, an upper limit, a lower limit and the like of a frequency f with respect to the value Wp of the active power P. A fluctuation permissible range, an upper limit, a lower limit and the like of a voltage V with respect to the value Wq of the reactive power Q) other than the information regarding sensitivities ($\Delta f/\Delta P$) and ($\Delta V/\Delta Q$) are appropriately obtained.

In a processing step S4, a loss Lc of a cable is arithmetically operated.

In a processing step S5, a control effect index E of Expression (1) is calculated. In addition, in a processing step S6, the processes of the processing steps S2 to S6 are repeatedly performed until the execution of all of the operation contents of the ancillary services is completed.

In a processing step S7, control effects are compared with each other. The comparison is performed by selecting an operation content for maximizing the control effect index E. Meanwhile, targets for the comparison may include power factor fixing control and a combination of ancillary services to be applied, in addition to operation contents of the respective ancillary services. Meanwhile, the comparison between control effects may include comparison to be performed at the future time, in addition to comparison performed at the present point in time. Thereby, in the processing step S7, the process is repeatedly performed while changing conditions until the execution of all of the operation contents is completed. Finally, in the processing step S7, a combination of outputs of an active power P and a reactive power Q in operation conditions for maximizing the control effect index E is extracted.

In addition, in the processing step S7, the combination of outputs of an active power P and a reactive power Q in operation conditions for maximizing the control effect index E is presented to a power transmission business operator side as a control plan CP. Presentation contents are related to a control plan for which it is considered that a value is largest in the state of the wind farm, and includes power factor 1. 0 fixation control, operation reserve power control or reactive power control which is an ancillary service, and value maximization control of an active power and a reactive power. Further, the presentation contents include specific processing contents of an ancillary service. Further, the presentation contents may be the present operation conditions or may be operation plans at the future time.

In a processing step S8, it is confirmed whether there is a change in the control plan CP which is presented to the power transmission business operator side, and the wind power generation system is operated in accordance with the initial control plan when there is no change in the control plan, and is operated in accordance with the changed control plan when there is a change in the control plan (processing step S9). Meanwhile, control of minimizing a cable loss in Expression (4) maybe reflected on the operation of the wind power generation system.

As described above, in short, the invention proposes a wind power generation system that presents and per forms a benefit maximization operation for which the intention of a power transmission business operator is taken into consideration, from a plant that generates power in a wind state as wind power generation (that is, a troublesome case may occur from a power transmission business operator side). Further, in order to realize the invention, a benefit maximization operation is estimated and arithmetically operated from association point information of a power generation business operator instead of estimating and arithmetically operating a benefit maximization operation by receiving various pieces of data from the power transmission business operator.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A wind farm (100) comprising:

   a control device (3) that adjusts power supplied from a wind power generation device (GW) through a power converter (C) to a power system (5),
   wherein the control device (3) includes
   a power value estimation unit that obtains information regarding a value of an active power (Wp) or a reactive power (Wq)in the power system (5),
   a control effect comparison unit (321) that calculates a control effect from the information regarding the value of the active power (Wp) or the reactive power (Wq) which is obtained by the power value estimation unit and information regarding a loss in a portion ranging from the converter to an association point (X) of the power system (5), and
   a control plan determination unit (32) that provides to the outside an instruction for or transmits, as a control plan (CP), the active power (Wp) or the reactive power (Wq) at the time of maximizing the control effect obtained by the control effect comparison unit (321) with respect to a plurality of sets of operation conditions in the power system (5).

2. The wind farm (100) according to claim 1, wherein the power value estimation unit obtains the information regarding a value of an active power (Wp) or a reactive power (Wq) from information regarding a sensitivity of a frequency with respect to an active power (Wp) in the power system (5) or a sensitivity of a voltage with respect to a reactive power (Wq) and regarding a necessary amount with respect to a permissible value of a frequency or a voltage.

3. The wind farm (100) according to claim 1 or 2, further comprising:

   a first database (DB1) that holds the information regarding the sensitivity of the frequency with respect to the active power (Wp) in the power system (5) or the sensitivity of the voltage with respect to the reactive power (Wq) and regarding the necessary amount with respect to the permissible value of the frequency or the voltage; and
   a second database (DB2) that holds the information regarding the loss in the portion ranging from the converter to the association point (X) of the power system (5).

4. The wind farm (100) according to claim 2 or 3, wherein the sensitivity of the frequency with respect to the active power (Wp) in the power system (5) is obtained from changes in the active power (Wp) and changes in the frequency before and after cancellation of active power (Wp) fixation control, and the sensitivity of the voltage with respect to the reactive power (Wq) in the power system (5) is obtained from changes in the reactive power (Wq) and changes in the voltage before and after cancellation of reactive power (Wq) fixation control.

5. The wind farm (100) according to any one of claims 2 to 4,
   wherein the active power (Wp) or the reactive power (Wq) are measured a plurality of times before and after cancellation of fixation control to thereby obtain the sensitivity of the active power (Wp) or the reactive power (Wq) by statistical processing.

6. The wind farm (100) according to any one of claims 1 to 5,
   wherein the plurality of operation conditions include operation conditions based on an ancillary service with respect to the power system (5).

7. The wind farm (100) according to any one of claims 1 to 6,
   wherein the wind farm (100) belongs to a power generation business operator, and presents the control plan of the activepower (CPP) or the reactive power (CPQ) to a power transmission business operator that possesses and manages the power system (5).

8. The wind farm (100) according to claim 7,
   wherein the wind farm (100) is operated in accordance with the control plan of the active power (CPP) or the reactive power (CPQ) which is presented to the power transmission business operator, or is operated in accordance with a control plan which is corrected after the presentation.

9. The wind farm (100) according to any one of claims 1 to 8,

wherein the wind farm (100) is connected to the association point (X) so as to supply power to the association point (X) of the power system (5) through a plurality of power converters from a plurality of wind power generation devices (GW) and is configured such that a sum of power transmission losses of power transmission lines ranging from the plurality of wind power generation devices (GW) to the association point (X) of the power system (5) through the plurality of power converters is adjusted to be a minimum by the control device (3).

10. The wind farm (100) according to any one of claims 1 to 9,
wherein the wind farm (100) is configured such that distribution of the reactive powers is performed at a ratio between reciprocals of impedances of the power transmission lines on the basis of the impedances of the power transmission lines ranging from the power converters to the association point (X) of the power system (5) so that a reactive power (Wq) of a power transmission line having a high impedance is small and a reactive power (Wq) of a power transmission line having a low impedance is large.

11. A wind farm (100) which is configured such that a plurality of sets of output terminals of wind power generation systems each of which is constituted by a wind power generation device (GW) and a power converter (C) are connected to each other in parallel and which is connected to a power system (5) at an association point, the wind farm (100) comprising:

a control device (3) that includes
a power value estimation unit that obtains information regarding a value of an active power (Wp) or a reactive power (Wq) from information regarding a sensitivity of a frequency with respect to an active power (Wp) in the power system (5) or a sensitivity of a voltage with respect to a reactive power (Wq) and regarding a necessary amount with respect to a permissible value of a frequency or a voltage,
a control effect comparison unit (321) that obtains a control effect, determined based on the information regarding the value of the active power (Wp) or the reactive power (Wq) which is obtained by the power value estimation unit and information regarding a loss in a portion ranging from the converter in each of the plurality of sets of the wind power generation systems to the association point (X) of the power system (5), with respect to a plurality of operation conditions and compares the control effects with each other, and
a control plan determination unit (32) that provides to the outside an instruction for or transmits, as a control plan (CP), the active power (Wp) or the reactive power (Wq) in a case of the operation conditions for maximizing the control effect.

12. A method of controlling a wind farm (100) including a control device (3) that adjusts power supplied from a wind power generation device (GW) through a power converter (C) to a power system (5), the method comprising:

obtaining information regarding a value of an active power (Wp) or a reactive power (Wq) from information regarding a sensitivity of a frequency with respect to an active power (Wp) in the power system (5) or a sensitivity of a voltage with respect to a reactive power (Wq) and regarding a necessary amount with respect to a permissible value of a frequency or a voltage;
obtaining a control effect, determined based on the information regarding the value of the active power (Wp) or the reactive power (Wq) and information regarding a loss in a portion ranging from the converter to an association point (X) of the power system (5), with respect to a plurality of operation conditions; and
externally giving an instruction of or transmitting, as a control plan (CP), the active power (Wp) or the reactive power (Wq) in a case of the operation conditions for maximizing the control effect.

13. The method according to claim 12,
wherein the wind farm (100) is operated in accordance with the control plan (CP) of the active power (Wp) or the reactive power (Wq) which is presented to the power transmission business operator, or is operated in accordance with a control plan (CP) which is corrected after the presentation.

14. The method according to claim 12 or 13,
wherein the wind farm (100) is connected to the association point (X) so as to supply power to the association point (X) of the power system (5) through a plurality of power converters from a plurality of wind power generation devices (GW) and is configured such that a sum of power transmission losses of power transmission lines ranging from the plurality of wind power generation devices (GW) to the association point (X) of the power system (5) through the plurality of power converters is adjusted to be a minimum by the control device (3).

# FIG. 1

# FIG. 2

## FIG. 3

Δf SUPPRESSION AMOUNT

$\frac{\Delta f}{\Delta P}$

AMOUNT OF CHANGE IN ACTIVE POWER ΔP

## FIG. 4

ΔV SUPPRESSION AMOUNT

$\frac{\Delta V}{\Delta Q}$

AMOUNT OF CHANGE IN REACTIVE POWER ΔQ

## FIG. 5

DB3

| No. | ANCILLARY SERVICE ITEM | METHOD OF REFLECTION ON WIND FARM CONTROL PLAN |
|---|---|---|
| 1 | FREQUENCY CONTROL | CONTROL OF SUPPRESSING ACTIVE POWER, CONTROL OF SUPPRESSION CANCELLATION |
| 2 | IMBALANCE ADJUSTMENT | SUPPRESSION OF ACTIVE POWER, CONTROL OF SUPPRESSION CANCELLATION |
| 3 | SPINNING RESERVE POWER | ACTIVE POWER CONTROL BASED ON SUPPRESSION OF ACTIVE POWER AND CONTROL OF EMITTING ROTATIONAL INERTIA ENERGY OF WINDMILL ROTOR |
| 4 | OPERATION RESERVE POWER | SUPPRESSION OF ACTIVE POWER, CONTROL OF SUPPRESSION CANCELLATION |
| 5 | SYSTEM CONTROL, SCHEDULING, POWER FEED INSTRUCTION | POWER GENERATION PLAN CONTROL BASED ON SUPPRESSION OF ACTIVE POWER |
| 6 | SUPPLY OF REACTIVE POWER AND VOLTAGE CONTROL | REACTIVE POWER CONTROL |
| 7 | BACKUP SUPPLY | SUPPRESSION OF ACTIVE POWER, CONTROL OF SUPPRESSION CANCELLATION |

## FIG. 6

## FIG. 7

WIND FARM 100

WIND POWER GENERATION SYSTEM 11

CURRENT COLLECTION CABLE 41

Z41

P41,Q41,V41

ASSOCIATION POINT

WIND POWER GENERATION SYSTEM 12

CURRENT COLLECTION CABLE 42

Z42

P42,Q42,V42

P, Q

WIND POWER GENERATION SYSTEM 1n

CURRENT COLLECTION CABLE 4n

Z4n

P4n,Q4n,V4n

## FIG. 8

ACTIVE POWER P (pu)

1.0

0.5

0

TIME

REACTIVE POWER Q (pu)

0.5

0

−0.5

TIME

## FIG. 9

OPERATION RESERVE POWER | REACTIVE POWER | COMBINATION

GENERABLE ACTIVE POWER

ACTIVE POWER (pu)

1.0

0.5

0

TIME

REACTIVE POWER (pu)

0.5

0

−0.5

TIME

T0      T1      T2      T3

## FIG. 10

INCOME OF POWER GENERATION BUSINESS OPERATOR (%)

REACTIVE POWER SUPPLY INCOME

OPERATION RESERVE POWER SECUREMENT INCOME

FIT POWER SELLING INCOME

A : POWER FACTOR 1.0 CONTROL     B : OPERATION RESERVE POWER CONTROL     C : REACTIVE POWER CONTROL     D : VALUE MAXIMIZATION CONTROL

## FIG. 11

## FIG. 12

# FIG. 13

# FIG. 14

## FIG. 15

## FIG. 16

# FIG. 17

```
              ( )
               │
               ▼          ╱S1
EXAMPLE 1  ┌─────────────────┐  EXAMPLE 2
           │ CONFIRM INFORMATION │
  ╱S11     │ REGARDING SENSITIVITIES OF │
┌──────────────┐ │ P AND Q AND NECESSARY AMOUNT │    ╱S12
│ OBTAIN (Δf/ΔP, ΔV/ΔQ) │        ┌──────────────┐
│ WITH REFERENCE TO DB1 │        │ PERFORM FIRST │
└──────────────┘        │ MEASUREMENT STAGE │
                                 └──────────────┘
                                        ╱S13
                                 ┌──────────────┐
                                 │ PERFORM SECOND │
                                 │ MEASUREMENT STAGE │
                                 └──────────────┘
                              OBTAIN (Δf, ΔP, ΔV, ΔQ)
                                        ╱S14
                                 ◇ ARE FIRST AND SECOND ◇
                                   MEASUREMENT STAGES NECESSARY
                                   NUMBER OF TIMES?
                                        ╱S15
                                 ┌──────────────┐
                                 │ DETERMINE (Δf/ΔP, ΔV/ΔQ) │
                                 │ BY STATISTICAL │
                                 │ PROCESSING │
                                 └──────────────┘
```

S1 CONFIRM INFORMATION REGARDING SENSITIVITIES OF P AND Q AND NECESSARY AMOUNT

S11 OBTAIN (Δf/ΔP, ΔV/ΔQ) WITH REFERENCE TO DB1

S12 PERFORM FIRST MEASUREMENT STAGE

S13 PERFORM SECOND MEASUREMENT STAGE

OBTAIN (Δf, ΔP, ΔV, ΔQ)

S14 ARE FIRST AND SECOND MEASUREMENT STAGES NECESSARY NUMBER OF TIMES?

S15 DETERMINE (Δf/ΔP, ΔV/ΔQ) BY STATISTICAL PROCESSING

S2 SELECT OPERATION CONTENT OF ANCILLARY SERVICE (INCLUDING POWER FACTOR FIXATION)

S3 ESTIMATE VALUES Wp AND Wq OF P AND Q

S4 ARITHMETICALLY OPERATE CABLE POWER LOSS Lc

S5 CONTROL EFFECT INDEX E (EXPRESSION (1))

S6 COMPLETE EXECUTION OF ALL OF OPERATION CONDITIONS

S7 COMPARE CONTROL EFFECTS WITH EACH OTHER AND PRESENT PLAN

S8 IS THERE CHANGE IN PLAN? — YES / NO

S9 OPERATE WIND POWER GENERATION SYSTEM

Europäisches
Patentamt

European
Patent Office

Office européen
des brevets

# EUROPEAN SEARCH REPORT

**Application Number**

EP 16 19 9060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/148974 A1 (DIEDRICHS VOLKER [DE]) 28 May 2015 (2015-05-28) | 1-8, 11-13 | INV.<br>H02J3/16 |
| Y | * the whole document * | 9,10,14 | H02J3/38<br>H02J3/46 |
| Y | US 2009/218817 A1 (CARDINAL MARK E [US] ET AL) 3 September 2009 (2009-09-03) * abstract * | 9,10,14 | |
| A | EP 2 733 811 A2 (SIEMENS AG [DE]) 21 May 2014 (2014-05-21) * paragraph [0042]; figure 2 * | 1-14 | |

**TECHNICAL FIELDS SEARCHED (IPC)**

H02J

The present search report has been drawn up for all claims

| Place of search | Date of completion of the search | Examiner |
|---|---|---|
| Munich | 5 April 2017 | Annibal, Stewart |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.................................................................
& : member of the same patent family, corresponding
     document

EPO FORM 1503 03.82 (P04C01)

**EP 3 171 477 A1**

## ANNEX TO THE EUROPEAN SEARCH REPORT
## ON EUROPEAN PATENT APPLICATION NO.

EP 16 19 9060

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2017

| Patent document cited in search report | Publication date | Patent family member(s) | Publication date |
|---|---|---|---|
| US 2015148974 A1 | 28-05-2015 | AR 091841 A1 | 04-03-2015 |
| | | AU 2013292247 A1 | 05-02-2015 |
| | | CA 2878993 A1 | 23-01-2014 |
| | | CL 2015000138 A1 | 24-04-2015 |
| | | CN 104521090 A | 15-04-2015 |
| | | DE 102012212777 A1 | 23-01-2014 |
| | | EP 2875562 A1 | 27-05-2015 |
| | | JP 2015523048 A | 06-08-2015 |
| | | KR 20150036699 A | 07-04-2015 |
| | | NZ 703980 A | 27-05-2016 |
| | | RU 2015105756 A | 10-09-2016 |
| | | TW 201415759 A | 16-04-2014 |
| | | US 2015148974 A1 | 28-05-2015 |
| | | WO 2014012789 A1 | 23-01-2014 |
| US 2009218817 A1 | 03-09-2009 | CN 101521388 A | 02-09-2009 |
| | | EP 2108828 A2 | 14-10-2009 |
| | | US 2009218817 A1 | 03-09-2009 |
| EP 2733811 A2 | 21-05-2014 | CN 103825307 A | 28-05-2014 |
| | | EP 2733811 A2 | 21-05-2014 |
| | | US 2014142771 A1 | 22-05-2014 |

EPO FORM P0459

For more details about this annex : see Official Journal of the European Patent Office, No. 12/82

**EP 3 171 477 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007124779 A

- JP 2012241576 A